(19) Europäisches Patentamt
European Patent Office
Office européen des brevets

(11) **EP 3 264 132 A1**

(12) **EUROPEAN PATENT APPLICATION**

(43) Date of publication:
**03.01.2018 Bulletin 2018/01**

(51) Int Cl.:
***G01S 13/87*** (2006.01)     ***G01S 13/74*** (2006.01)

(21) Application number: **16177396.5**

(22) Date of filing: **30.06.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **OpenController B.V.
5258 EX Berlicum (NL)**

(72) Inventors:
• **Krikke, Edwin
  9990 Weiswampach (LU)**
• **Mes, Frederic
  9990 Weiswampach (LU)**
• **The other inventors have waived their right to be
  thus mentioned.**

(54) **PULSED RADIO TIMING AND PROPAGATION CORRECTION IN SPATIAL MEASUREMENT**

(57)     Technical Problem

The present invention has been made to provide a method of transmitting multicast timing data to devices.

It is another object of the present invention to provide a method of determining angles of incoming wideband signals

It is another object of the present invention to provide a method of analysis of the signal input response

It is a further object of the present invention to provide a method of correcting timestamps for moving objects during measurement.

It is a further object of the present invention to provide a method of detecting blocking of direct signal path by material other then air.

figure 1

**Description**

TECHNICAL FIELD

The present invention relates to a wireless position measurement system and, more particularly, to
a method of transmitting multicast timing data to devices,
a method of determining angles of incoming wideband signals,
a method of signal input response analysis
a method of timing correction on fast moving devices
and an apparatus supporting the same.

BACKGROUND

Hereinafter, a wide band radio position measurement environment in the present invention will be briefly described.

Wide band radio position measurement environment refers to the use of timestamped radio pulses to determine the position of objects,persons and or live stock.
A pulsed radio signal with a wide bandwidth is used. Typical bandwidth of the signal is 100MHz or more. The invention is based on but not limited to signals of 500MHz bandwidth. The radio transceiver is capable of transmitting and receiving wideband signals.

Wideband receivers capable of analysis of incoming signals using analog to digital convertor to store signal strength, time difference of arrival and or phase information are used in this invention. Typical sample interval for storage of signal strength and phase information is below 25ps (pico second) and hundreds of datapoints. The sample interval is also used to timestamp incoming pulses of wideband signals.

Using multiple time synchronised wideband transceivers and coupled antenna arrays comprising of two or more antennas, angles of incoming signals can be determined by comparing phase- and or time difference of arrival of the incoming signals.
The phase difference has a direct relation with the angle of which the incoming signal reaches the antenna array. This method is used to determine the angle of arrival (AoA) of incoming signals. Distance measurement combined with AoA reduces the amount of required anchors while maintaining spatial accuracy of a tag after dataprocessing.

Radio signals can reflect or bounce of materials. Reflected pulses will arrive later in time relative to pulses in direct or shortest path between two wideband transceivers.
Reflected pulses are also recorded and the time difference between first pulse and recorded reflected pulse is a method to measure additional distance traveled after converting time difference to distance. Receiving pulses transmitted by a wideband pulse source on different locations is used to determine where a reflective object is located relative to the position of the source and receivers based on the above described method.

Wideband radio transceivers are placed at one or more locations to create a spatial reference system. These wideband transceivers are named 'anchors'.
From the anchor a wideband radio signal is transmitted to one or more tags. Multicast refers to multiple tags and or anchors receiving the same wideband radio signal.
A tag is another wideband radio transceiver device placed on an object, person or live stock to determine spatial information relative to the anchor.
A tag can also be known as an IoT (internet of things) device. In general a tag is a mobile device of which the position is to be determined by the wireless pulsed radio system.
In most cases distance, orientation and derived metrics are of interest as spatial information of a tag. Distance between anchor and tag are determined by converting the radio signal travel time through a medium to a measure of distance like millimeters or other similar unit.
The process of converting time measurements to distances and or a spatial position is also known as ranging.

Radio signal travel time is dependent on type of medium.
Most common medium is air.
A medium with a higher dielectric value relative to air will experience a longer travel time.
This longer travel time result in a incorrect distance in case it was assumed all of the radio signal path went through air.

Using multiple anchors is standard practice to improve accuracy of the calculated position of an object, person or live stock.
An anchor transmit data in a wireless method to a data collection anchor for further processing.

Latency is the time delay between measurement and the processing of the collected timestamp data. Latency can be reduced by forwarding the collected data using other means then wireless communication to a data offloading point. Latency can also be reduced to only record the timestamp.

Typical problems with radio based location systems are low accuracy, low timing accuracy, low density of tags and high latency.

## DESCRIPTION OF DRAWINGS

The accompanying drawings provide embodiments of the invention together with the description to help the understanding of the present invention.
However, technical features of the present invention are not limited to the accompanying drawings and features disclosed in the respective drawings may be combined to constitute new embodiments.

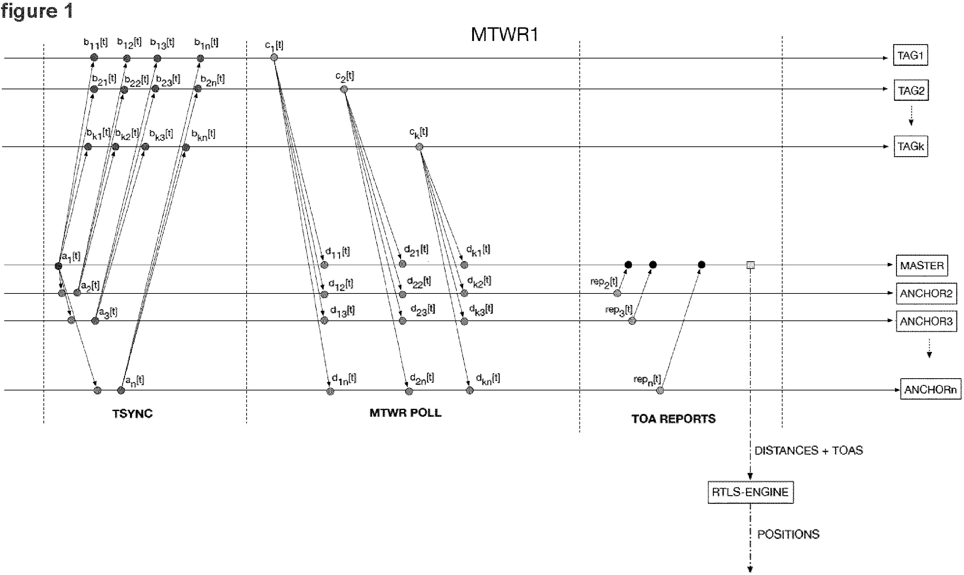

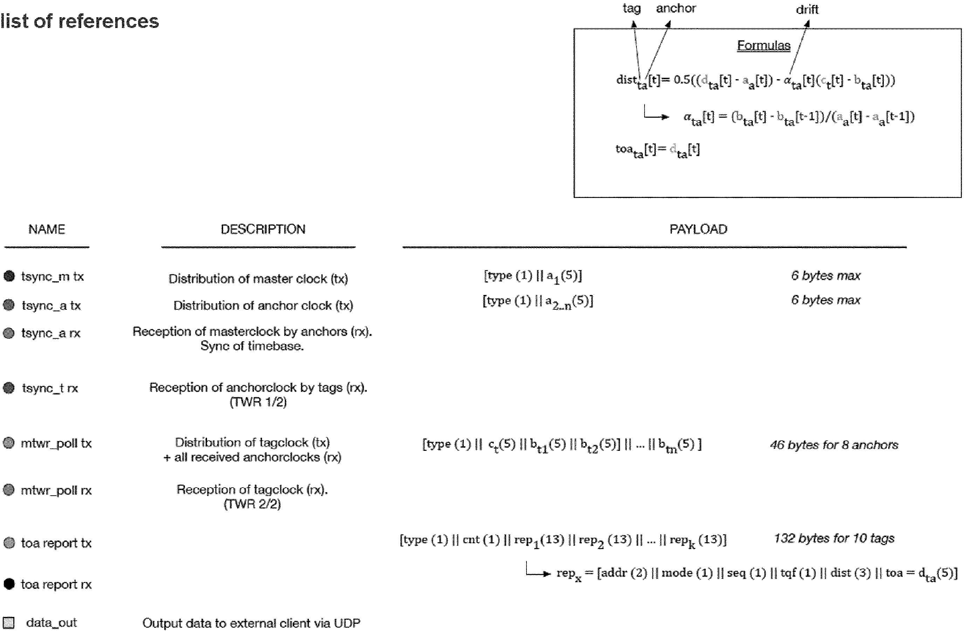

FIG. 1 is a view schematically illustrating configuration of multicast two way ranging and time different of arrival. At the start of a measurement cycle a time sync signal is transmitted (Tsyn part on left side of drawing). A tag on receiving these time sync messages timestamps every message and send all received data and added timestamp data back to anchors. On timestamping the received dataset on every anchor distances from all anchors to tags can be determined by calculating the timedifferences. All tags receive upon activation a synchronization message from one or more anchors used to assign an operational timeslot to avoid collision in radio signals. TDoA mode (time difference) of arrival refers to a operational mode at which a tag only send timestamped data to anchors without receiving data send by anchors in order to reduce energy consumption.

## DESCRIPTION OF EMBODIMENTS

## INDUSTRIAL and NON- INDUSTRIAL APPLICABILITY

The embodiments of the present invention may be applied to various wireless tracking and positioning systems.
Examples of the wireless tracking and positioning system may include Institute of Electrical and Electronic Engineers (IEEE 802.15.4-2011) systems.
In addition, the embodiments of the present invention may be applied to all technical fields utilizing the above wireless tracking and positioning systems in addition to the above wireless tracking and positioning systems.

**list of references**

tag anchor drift

### Formulas

$$dist_{ta}[t] = 0.5((d_{ta}[t] - a_a[t]) - \alpha_{ta}[t](c_t[t] - b_{ta}[t]))$$

$$\alpha_{ta}[t] = (b_{ta}[t] - b_{ta}[t-1])/(a_a[t] - a_a[t-1])$$

$$toa_{ta}[t] = d_{ta}[t]$$

| NAME | DESCRIPTION | PAYLOAD | |
|---|---|---|---|
| ⬤ tsync_m tx | Distribution of master clock (tx) | $[type\,(1)\,\|\|\,a_1(5)]$ | 6 bytes max |
| ⬤ tsync_a tx | Distribution of anchor clock (tx) | $[type\,(1)\,\|\|\,a_{2..n}(5)]$ | 6 bytes max |
| ◎ tsync_a rx | Reception of masterclock by anchors (rx). Sync of timebase. | | |
| ⬤ tsync_t rx | Reception of anchorclock by tags (rx). (TWR 1/2) | | |
| ◉ mtwr_poll tx | Distribution of tagclock (tx) + all received anchorclocks (rx) | $[type\,(1)\,\|\|\,c_t(5)\,\|\|\,b_{t1}(5)\,\|\|\,b_{t2}(5)]\,\|\|\,...\,\|\|\,b_{tn}(5)\,]$ | 46 bytes for 8 anchors |
| ◉ mtwr_poll rx | Reception of tagclock (rx). (TWR 2/2) | | |
| ◎ toa report tx | | $[type\,(1)\,\|\|\,cnt\,(1)\,\|\|\,rep_1(13)\,\|\|\,rep_2\,(13)\,\|\|\,...\,\|\|\,rep_k\,(13)]$ | 132 bytes for 10 tags |
| ⬤ toa report rx | | ↳ $rep_K = [addr\,(2)\,\|\|\,mode\,(1)\,\|\|\,seq\,(1)\,\|\|\,tqf\,(1)\,\|\|\,dist\,(3)\,\|\|\,toa = d_{ta}(5)]$ | |
| ▢ data_out | Output data to external client via UDP | | |

## Claims

1. A method of a ranging in an mode receiving multicast data in a wireless system, the multicast data receiving method comprising:

   - master anchor transmitting a timesync message to all anchors in the system and or to secondary masters. Each anchor may analyse the incoming signal to detect the first incoming pulse and or to analyse the pulse energy thereafter.
   - every anchor transmitting a timesync message to be received by all tags which can receive this timesync message. Each tag may analyse the incoming signal to detect the first incoming pulse and or to analyse the pulse energy thereafter
   - every tag transmit received time data from anchors and the result of signal analysis of incoming signals to all anchors which can receive the message. This timestamp is also used to compensate for added time delay which cause for inaccuracy in distance measurement when tags move at high speed. The timestamp send by the tag is received by anchors which are time synchronized thus allowing for accurate position calculation since the transmission of the measurement pulse is below 1 micro second and the signal detection resolution is below 25pico second.
   - all anchors transmit the collected data back to a master anchor which may analyse the incoming signals to detect the first incoming pulse and or to analyse the pulse energy thereafter and forward the received data for further processing to a processing unit.

2. The multicast receiving method according to claim 1, wherein the phase difference between two receivers is used to determine the angle of the incoming wideband signal.
   A method of reading phase information from wideband receiver from two or more time synchronised wideband transceivers connected to a coupled antenna array comprising of two or more antennas enable determination of phase difference of an incoming signal.

3. The multicast data receiving method according to claim 1, wherein the recorded time series pulse information stored in the receiver is used to determine additional path length to reflective objects.
   A method of reading signal strength of received pulses from wideband receiver as a time series pulse recording to determine additional path length to reflective objects.

4. The multicast data receiving method according to claim 1, wherein timestamps of incoming signals of two or more ranging events are compared to determine and correct movement of a tag during the measurement interval. A method to substract the second timestamp from the first recorded timestamp relative to the measurement interval. In case of no difference the tag was stationary and did not move. Positive value indicate the tag moved away relative to the anchor and a negative value indicate the tag moved toward the anchor. The difference relative to time indicate the speed of movement of the tag.

5. The multicast data receiving method according to claim 1, correcting measured distance to compensate for movement versus propagation time of the wireless signal

6. The multicast data receiving method according to claim 1, wherein the received signalstrength on the tag is forwarded to the anchor and central processing unit for validation. In case the determined distance to signal strength ratio significantly changes in a subsecond interval the signal is likely blocked by an object or medium other then most commonly encountered air.

7. A wideband radio transceiver capable of receiving and transmitting pulsed radio signals, comprising:

a transmitting module;
a receiving module capable of receiving external clock input to synchronize multiple receivers;
a timestamp module capable of detecting and time-stamping wideband pulses;
a signal analytics module capable of measuring phase and signal strength of an incoming signal;
a storage module to store phase and signal strength of incoming signals during a short period after detecting and receiving a first pulse.

figure 1

# list of references

tag   anchor                drift

$$dist_{ta}[t] = 0.5((d_{ta}[t] - a_a[t]) - \alpha_{ta}[t](c_t[t] - b_{ta}[t]))$$

$$\alpha_{ta}[t] = (b_{ta}[t] - b_{ta}[t-1])/(a_a[t] - a_a[t-1])$$

$$toa_{ta}[t] = d_{ta}[t]$$

*Formulas*

| NAME | DESCRIPTION | PAYLOAD | |
|------|-------------|---------|---|
| ● tsync_m tx | Distribution of master clock (tx) | $[type\ (1)\ \|\|\ a_1(5)]$ | *6 bytes max* |
| ● tsync_a tx | Distribution of anchor clock (tx) | $[type\ (1)\ \|\|\ a_{2..n}(5)]$ | *6 bytes max* |
| ● tsync_a rx | Reception of masterclock by anchors (rx). Sync of timebase. | | |
| ● tsync_t rx | Reception of anchorclock by tags (rx). (TWR 1/2) | | |
| ● mtwr_poll tx | Distribution of tagclock (tx) + all received anchorclocks (rx) | $[type\ (1)\ \|\|\ c_t(5)\ \|\|\ b_{t1}(5)\ \|\|\ b_{t2}(5)]\ \|\|\ ...\ \|\|\ b_{tn}(5)\ ]$ | *46 bytes for 8 anchors* |
| ● mtwr_poll rx | Reception of tagclock (rx). (TWR 2/2) | | |
| ● toa report tx | | $[type\ (1)\ \|\|\ cnt\ (1)\ \|\|\ rep_1(13)\ \|\|\ rep_2\ (13)\ \|\|\ ...\ \|\|\ rep_k\ (13)]$ | *132 bytes for 10 tags* |
| ● toa report rx | | $rep_x = [addr\ (2)\ \|\|\ mode\ (1)\ \|\|\ seq\ (1)\ \|\|\ tqf\ (1)\ \|\|\ dist\ (3)\ \|\|\ toa = d_{ta}(5)]$ | |
| ▢ data_out | Output data to external client via UDP | | |

EP 3 264 132 A1

Europäisches
Patentamt

European
Patent Office

Office européen
des brevets

# EUROPEAN SEARCH REPORT

Application Number

EP 16 17 7396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/200706 A1 (BOTTAZZI MARCO [IT] ET AL) 16 July 2015 (2015-07-16) | 1 | INV.<br>G01S13/87<br>G01S13/74 |
| Y | * paragraph [0039] *<br>* paragraph [0045] *<br>* paragraph [0047] *<br>* paragraph [0072] - paragraph [0076] *<br>* paragraph [0080] *<br>* paragraph [0088] *<br>* paragraph [0097] *<br>* paragraph [0108] - paragraph [0110] *<br>* figure 12A *<br>* paragraph [0118] *<br>* paragraph [0196] *<br>* paragraph [0202] - paragraph [0207] *<br>* paragraph [0210] * | 7 | |
| Y<br>A | US 2006/145853 A1 (RICHARDS JAMES L [US] ET AL) 6 July 2006 (2006-07-06)<br>* paragraph [0187] - paragraph [0191]; figure 16 * | 7<br>1-6 | |
| A | EP 2 525 236 A1 (NANOTRON TECHNOLOGIES GMBH [DE]) 21 November 2012 (2012-11-21)<br>* paragraph [0001] *<br>* paragraph [0010] *<br>* figures 5,6 *<br>* claim 1 * | 1-7 | TECHNICAL FIELDS SEARCHED (IPC)<br><br>G01S<br>H04W |
| A | WO 02/27348 A2 (UT BATTELLE LLC [US]; SMITH STEPHEN F [US]) 4 April 2002 (2002-04-04)<br>* the whole document * | 1-7 | |

The present search report has been drawn up for all claims

| Place of search | Date of completion of the search | Examiner |
|---|---|---|
| Munich | 5 May 2017 | Ó Donnabháin, C |

EPO FORM 1503 03.82 (P04C01)

**EP 3 264 132 A1**

## ANNEX TO THE EUROPEAN SEARCH REPORT
## ON EUROPEAN PATENT APPLICATION NO.

EP 16 17 7396

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2017

| Patent document cited in search report | | Publication date | Patent family member(s) | | Publication date |
|---|---|---|---|---|---|
| US 2015200706 | A1 | 16-07-2015 | EP 2872916 A1<br>US 2015200706 A1<br>WO 2014009981 A1 | | 20-05-2015<br>16-07-2015<br>16-01-2014 |
| US 2006145853 | A1 | 06-07-2006 | NONE | | |
| EP 2525236 | A1 | 21-11-2012 | EP 2525236 A1<br>US 2013021206 A1 | | 21-11-2012<br>24-01-2013 |
| WO 0227348 | A2 | 04-04-2002 | AU 1137502 A<br>AU 2002211375 B2<br>CA 2424040 A1<br>EP 1325347 A2<br>MX PA03002680 A<br>US 6556942 B1<br>WO 0227348 A2 | | 08-04-2002<br>13-04-2006<br>04-04-2002<br>09-07-2003<br>15-10-2003<br>29-04-2003<br>04-04-2002 |

EPO FORM P0459

For more details about this annex : see Official Journal of the European Patent Office, No. 12/82